# EUROPEAN PATENT SPECIFICATION

(11) **EP 0 485 996 B1**
(45) Date of publication and mention of the grant of the patent: **03.04.1996**
(21) Application number: 91119370.4
(22) Date of filing: 13.11.1991
(51) Int. Cl.: G07G 1/00

(54) **Flexible merchandise checkout and inventory management system**
Flexibles Warenauszahl- und Inventarverwaltungssystem
Système flexible d'enregistrement-en-sortie d'articles et de gestion d'inventaire

(30) Priority: 13.11.1990 US 612664
(43) Date of publication of application: 20.05.1992
(73) Proprietor: SYMBOL TECHNOLOGIES, INC., Bohemia New York 11716-3300 (US)
(72) Inventor: Bravman, Richard, Smithtown, New York 11787 (US); Toedt III, D.C., Houston, Texas 77005 (US)
(74) Representative: Wagner, Karl H.

(56) References cited:
- EP-A- 0 210 963
- EP-A- 0 339 266

## Description

### 1. BACKGROUND OF THE INVENTION

The present invention relates to apparatus for utilizing scanners (e.g., contact scanners or laser-beam scanners) in conjunction with optical read-only memories (e.g., "bar codes") to achieve various useful results.

With respect to the prior art attention is drawn to EP-A-339 266 A2, which discloses a merchandise check-out system for a self-service shop. A data reading station is provided for reading data of goods relating to the goods themselves and/or their prices. A payment station for receiving the customers' payment is provided remote from the data reading station.

The present invention relates to a merchandise check-out system as referred to in claim 1.

Preferred embodiments are disclosed in the dependent claims.

### 2. SUMMARY OF THE INVENTION

In an embodiment of the invention, a flexible information input system is used to speed up customer check-outs at high-volume retail establishments such as, e.g., grocery stores, large toy stores, and the like.

### 3. BRIEF DESCRIPTION OF THE DRAWINGS

Figure 1 is an electrical diagram in block form of a communication system featured in certain embodiments of the invention.

Figure 2 is a timing diagram showing events (RF transmission) vs. time for a data transmission sequence in the illustrative system of Figure 1.

Figure 3 is a more detailed electrical schematic diagram in block Corm of the host computer and one of the base stations in the illustrative system of Figure 1.

Figure 4 is a more detailed electrical diagram in block form of one of the remote terminals in the system of Figure 1.

Figure 5 is a sectional view of a hand-held bar code scanner unit which may be used as a remote terminal in certain embodiments of the invention.

Figure 5a is a pictorial view of another type of bar code reader which may be used as a remote terminal instead of or in addition to the scanner of Figure 5.

Figure 6 is a view of a part of a bar code symbol that may be read by the remote unit of Figures 4 and 5 or 5a, and a timing diagram of the electrical signal produced thereby.

Figure 7A is a block diagram in "plan" view of a typical prior-art check-out lane. Figure 7B is a similar diagram of an improved, retrofittable check-out lane in accordance with the invention.

Figure 8 is a block diagram in "plan" view of a transportable check-out station and payment station in accordance with the invention. Figure 9 is a logic diagram of certain functions performed by the stations. Figures 10 - 16 further elucidate the invention.

### 4. DETAILED DESCRIPTION OF SPECIFIC EMBODIMENTS

A number of specific embodiments of the invention are described here. It will be understood that these embodiments are presented for purposes of illustration and not as limiting the scope of the invention as claimed below.

### 4.1 Overview of Data Communications Network

It is helpful to survey some of the basic hardware and software component types and architecture types used in the illustrative embodiments described here.

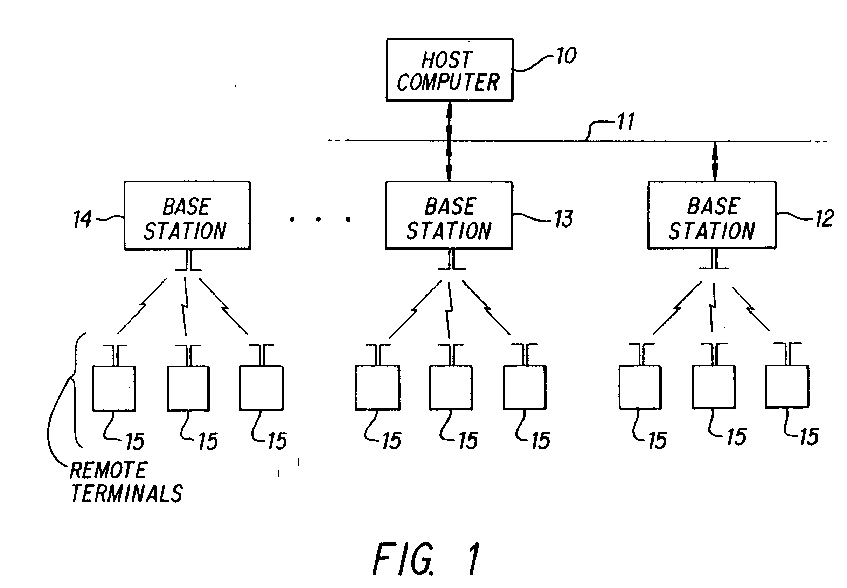

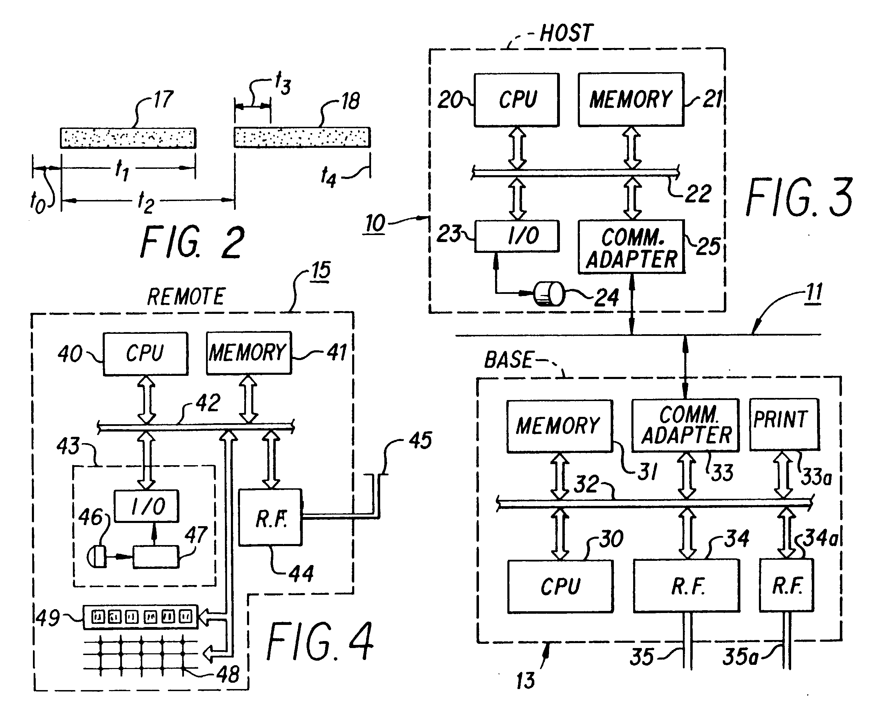

**(a) Network Architecture.** Referring to Figure 1, an exemplar data communications network is shown; the network is described in more detail in the commonly assigned co-pending application Serial No. 374,452, PACKET DATA COMMUNICATION NETWORK, filed June 29, 1989. A host processor 10 is connected by a communications link 11 to a number of base stations 12 and 13; other base stations 14 can be coupled to the host through the base stations 12 or 13 by an RF (radio frequency)link. Each one of the base stations 12, 13, or 14 is coupled by an RF link to one or more remote units 15 (sometimes referred to for convenience herein as "terminals" or "readers"). The RF link utilizes a protocol, a timing diagram of which is depicted in Figure 2 as explained in more detail in the aforementioned co-pending application. Alternatively, the remote units 15 may be connected to the host processor 10 by physical wiring, perhaps via one or more intermediary units 12, 13, or 14.

In one embodiment of the invention, the remote units 15 are laser-scan bar-code readers of the hand-held, battery-operated type, for example, as disclosed in U.S. Patents No. 4,387,297; 4,409,470; or 4,760,248, all commonly assigned with this application to Symbol Technologies, Inc. Various other types of remote terminals may be advantageously employed in a system in accordance with the invention; these remote terminals would ordinarily include data entry facilities such as a keyboard or the like, as well as a display (or printer) for indicating to a user information detected, transmitted, and/or received by the remote unit 15.

In the embodiment used as an illustrative example, there may be from one up to 64 of the base stations 12, 13, and 14 (three being shown in the Figure), and up to several hundred of the remote units 15. Of course, the network may be expanded by merely changing the size of address fields and the like in the digital system.

Although hand-held, laser-scan type bar-code readers are mentioned here by way of example, the terminals 15 may also be bar-code readers of the wand type, and except as may be otherwise mentioned below may be stationary rather than hand-held. In other embodiments, the device may be of the optical character recognition (OCR) type as well.

**(b) Host Computer.** Referring to Figure 3, one typical host-computer architecture is shown. The host processor 10 maintains a database management system (DBMS), employing suitable database management software similar to that commercially available, to which the remote units 15 make entries or inquiries via the base stations 12, 13, and 14.

The host processor 10 has a CPU 20 which may be a microprocessor device of the 80386 type manufactured by Intel Corporation, for example, and the CPU accesses a memory 21 via a main bus 22 to execute instructions. Various I/O processors 23 are used to access peripherals such as keyboard, video display, etc., as well as disk storage 24 for the database system and other computer functions. A communications adapter 25 couples the CPU 20 via the main bus 22 to the link 11. This communications link 11 may be of the serial type such as RS-232, or alternatively the link 11 may use one of the available local area network (LAN) type of protocols.

**(c) Transportable Base Stations.** The base stations 12, 13, and 14 each utilize a CPU 30 which accesses a memory 31 via a local bus 32, also seen in Figure 3. This data processing unit is coupled to the serial link 11 via a communications adapter 33. A printer 33a may be included which may be driven by the CPU 30 via the local bus 32 to print data from the memory 31. An RF transceiver 34 is coupled to the CPU 30 in each base station via the local bus 32 and is connected to an antenna 35 for RF transmission to and reception from the remote units 15. An additional RF transmitter 34a may be used, as well, as an RE link to and from other base stations, if necessary. An example of a commercially-available microprocessor device which may be used as the CPU 30 is a V-25 device manufactured by NEC Corporation, which is the same device used in the remote units 15.

The base stations 12, 13, and 14 are ordinarily located in various rooms or bays of the commercial establishment containing the network of Figure 1. The RF signal path in this environment is changeable in nature as equipment, fork-lift trucks, furniture, doors, etc., are moved about, or as the user moves from place to place and carries the hand-held remote unit with him, or as the network is expanded or reduced in size; there is a high degree of multipathing in this type of RF. Thus, the particular one of the base stations communicating at a given time with one of the remote units 15 may change; to this end a "hand-off" protocol maybe utilized as described in the co-pending application to change the base station which is designated to handle a remote unit. In this manner, a remote unit 15 has a confirmed link with only one base station at a time, although other base stations may be within range of the remote unit 15.

The base station 12, 13, or 14 is merely an intermediary. The remote unit is communicating with the host processor 10, and the function of a base station is merely to relay data from a remote unit to the host computer or vice versa. In some installations there may be only one base station, in which case the communications link 11 may be a direct connection via an RS-232 serial port and cable or, if the building is such that the base station can be mounted at the same location as the host computer, the link 11 may be replaced by a parallel bus-to-bus interface, in which case the base station and host computer may be considered a single unit.

In some of the implementations discussed below, a base station 12, 13, 14 will preferably be transportable, e.g., mounted on a suitable cart in a conventional manner. Suitable power and communications jacks may be provided, e.g., at strategic points in flooring, to provide electrical power as well as a link between the base station and the host computer 10. Alternatively, such a link may be provided as an RF link as discussed above.

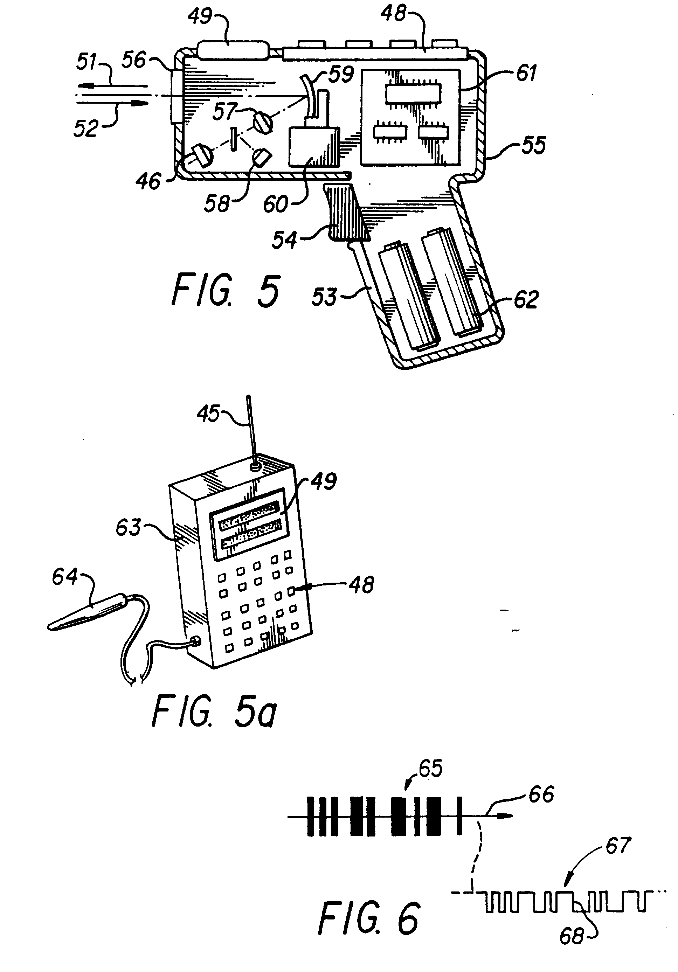

**(d) Remote Terminal Units.** Referring to Figure 4, each remote unit 15 in the example embodiment is a data terminal (e.g., a hand-held bar code reader) having a CPU 40 executing instructions from a program and data memory 41 which is coupled to the CPU via a local bus 42. A peripheral bar code data acquisition device 43 is coupled to the CPU via the bus 42 and is used to detect and/or convert data from the bar code scanning section to be stored in the memory 41 and processed by the CPU 40; other control devices may interface with a keyboard and display. An RF transceiver 44 is coupled to and controlled by the CPU via the bus 42, and transmits the coded RF signal through an antenna 45 or detects and converts RF received by the antenna, according to a protocol. In an alternative embodiment, the terminal unit 15 may be connected with the host computer 10 via a conventional electrical or optical cable. Usually the remote unit 15 has a manual data entry device such as a keyboard 48, and a visual display 49 such as an LCD device.

Although other data terminal units 15 maybe advantageously employed in a system having features of the invention, a hand-held, laser-scan, bar code reader unit as illustrated in Figure 5 is an example of a remote unit particularly suited for use in the system of Figure 1. This hand-held device of Figure 5 is generally of the style disclosed in U.S. Patents No. 4,760,248, 4,806,742, or 4,816,660, commonly assigned with this application to Symbol Technologies, Inc., and also similar to the configuration of a bar code reader commercially available as part number LS 8100II from Symbol Technologies. Alternatively, or in addition, features of U.S. Patents No. 4,409,470 or 4,816,661 maybe employed in constructing the bar code reader 15 of Figure 4. The aforementioned patents are incorporated herein by reference.

Referring to Figure 5, an outgoing light beam 51 is generated in the reader 15, usually be a laser diode or the like, and directed to impinge on a bar code symbol a few inches from the front of the reader unit. The outgoing beam 51 is scanned in a fixed linear pattern, and the user positions the hand-held unit so this scan pattern traverses the bar code symbol to be read. Reflected light 52 from the symbol is detected by a light-responsive device 46 in the reader unit, producing serial electrical signals to be processed for identifying the bar code. The reader unit 15 is a gun-shaped device having a pistol-grip type of handle 53, and a movable trigger 54 is employed to allow the user to activate the light beam 51 and detector circuitry when pointed at the symbol to be read, thereby saving battery life if the unit is self-powered. A lightweight plastic housing 55 contains the laser light source, the detector 46, the optics and signal processing circuitry, and the CPU 40 and RF transceiver 44 of Figure 4, as well as a battery. A light-transmissive window 56 in the front end of the housing 55 allows the outgoing light beam 51 to exit and the incoming reflected light 52 to enter.

Also seen in Figure 5 in connection with the remote unit 15 are a lens 57 used to collimate and focus the scanned beam into the bar code symbol at the proper depth of field; a light source 58 such as a semiconductor diode; an oscillating mirror attached to a scanning motor 60 which is activated when the trigger 54 is pulled. The electronic components of Figure 3 are mounted on one or more small circuit boards 61 within the housing 55 of Figure 4, and batteries 62 are enclosed to provide a self-contained portable unit. The antenna 45 may be printed on one of the circuit boards 61.

Referring to Figure 5a, another embodiment of a remote terminal 15 is illustrated wherein a wand-type bar code reader is employed instead of the laser scanner of Figure 5. The device of Figure 5a is similar to a commercially available portable radio terminal sold under the product name "MSI PRT" by MSI Data Corporation, of Costa Mesa, California, a subsidiary of Symbol Technologies, Inc., which is the assignee of this application. The keyboard 48 and display 49 are mounted at the face of a hand-held housing 63, and the light source 58 (in this case an LED, for example) and light detector 46 (not seen in Figure 5a) are mounted within a pencil-shaped wand 64 connected to the housing 63 by a cable. The person using the device of Figure 5a holds the housing 63 in one hand and the wand 64 in the other, and moves the wand 64 across the bar code symbol, in contact with the symbol, instead of holding the unit steady (spaced from the symbol) and relying upon the oscillating mirror to generate the scan of the symbol as is the case for the embodiment shown in Figure 5. Otherwise, the device of Figure 5a contains the circuitry of Figure 4, and the RF link operates in the same way.

**(e) Bar Code Labels.** In some of the applications described below, a conventional bar code such as the well known Code 39 (for example) may be used. In other applications, it is particularly advantageous to utilize a high-density, two-dimensional (2D) bar code symbology similar to that disclosed in the commonly assigned co-pending application Serial No. 461,881, by Pavlidis et al. As used herein, the term "bar code" is intended to encompass any symbol representative of information content and whose information content is readable by a reader 15.

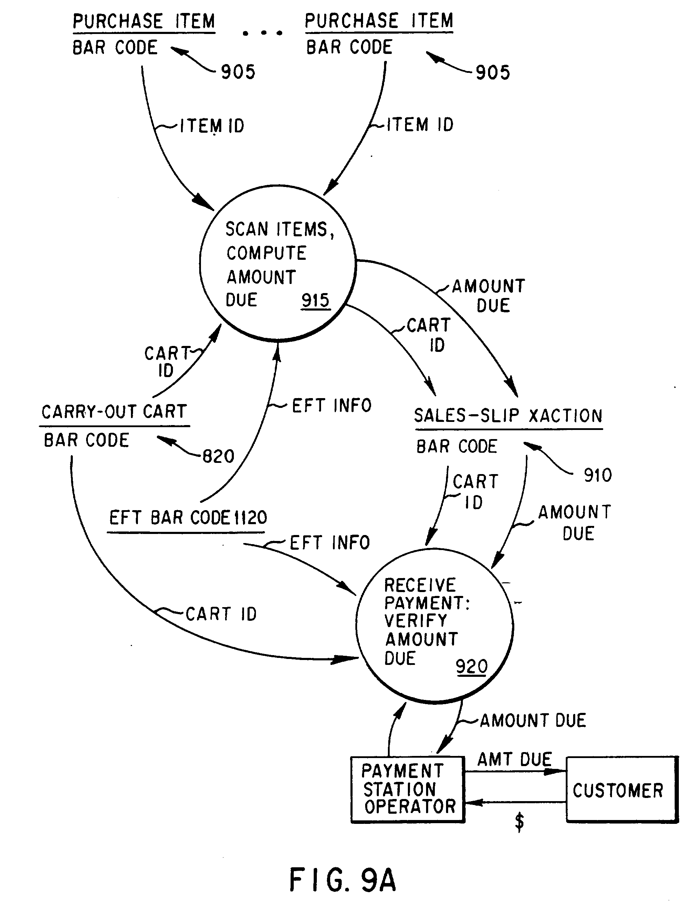

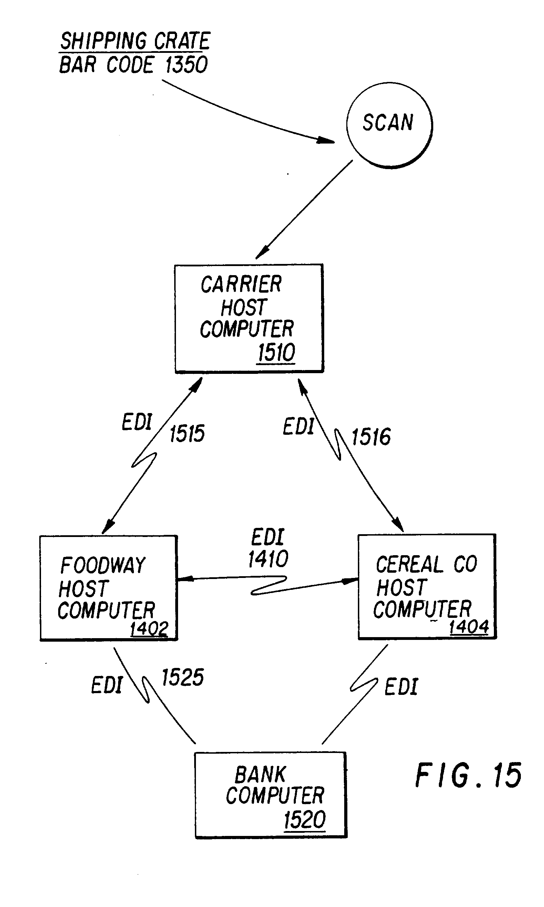

**(f) Software for System Control.** Figures 9A, 9B, 10-11, 14A, 14B, and 15-16 set forth logic diagrams of certain database management functions and the like performed by the illustrative embodiments. Those skilled in the art will appreciate that the actual optimum organization and structure of software to control various hardware components in accordance with the invention will depend greatly on the characteristics of the specific hardware with which the invention is implemented, and likewise that functions shown as implemented in software can equivalently be implemented in, e.g., discrete-logic hardware and vice versa. By and large, the logic diagrams do not set forth common input/output (I/O) routines, error trapping and/or handling, boundary condition detection, and similar conventional functions.

### 4.2 Limitations of Conventional Check-Out Lanes

Large retail stores frequently have many check-out lanes in order to be able to handle higher customer throughput at peak periods. Such lanes tend to be crowded together as much as possible in an attempt to minimize the square footage required for the check-out function. Many of these lanes, however, remain idle during a considerable portion of any given business day, thereby wasting the square footage allocated to them.

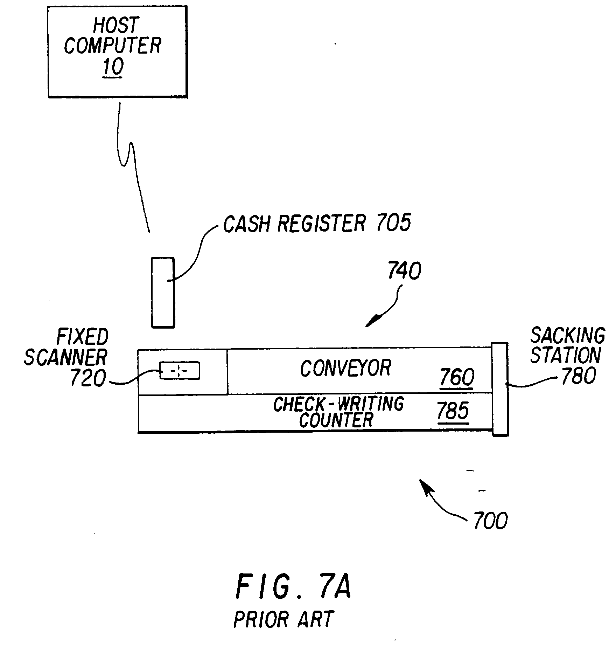

Referring to Figure 7A, a modern grocery store check-out lane typically includes a cash register 705 that is used to check out merchandise items bearing bar code labels. A cashier removes items from a shopping carrier such as a cart 710 one a time, drags them across the laser beam of a fixed scanner 720 (e.g., a "slot" scanner built into a horizontal counter 740), and places them on a moving conveyor belt 760. The fixed scanner 720 is linked with a processor, e.g., a CPU built into the cash register 705, that translates the bar code symbol on a package into a cash register entry including the price of the scanned item and, e.g., a brief description of the item. In some implementations the translation may be direct, i.e., the price of the item is encoded in the bar code itself. In other implementations, the translation is indirect, i.e., the bar code encodes item identification information that is used as the input to a lookup table, e.g., in disk storage, from which information such as the price and brief description are obtained.

Downstream of the cash register 705 on the conveyor belt 760 is a sacking station 780; one or more baggers removes previously scanned items from the conveyor belt 760 and places the items in paper or plastic sacks. (Some items, e.g., non-canned fruits and vegetables, are not scanned; their prices are entered manually using a cash register keyboard and/or a scale, neither of which are shown in Figure 7A). When all items have been scanned or otherwise checked, the cash register 705 tallies the prices of the items, factors in any discounts (e.g., coupon discounts) or other adjustments (e.g., sales taxes on some items), displays the total to be paid by the customer, and prints a receipt. In sophisticated systems, the cash register 705 is linked with a host computer 10 via cabling or other arrangement. While the purchases are being "rung up," the customer may write a check to pay for the purchases at a check-writing counter 785.

A throughput-limiting aspect of this arrangement is the fact that typicaly only one person at a time empties a shopping cart 10 and scans the items contained therein. Two or more persons could theoretically share a fixed scanner 720, but this could easily create physical coordination problems involving each person getting in the other person's way.

Another throughput-limiting factor is that a certain amount of time is required for the cashier to verify that the customer's check is not obviously a "bad check" (e.g., by transmitting the customer's driver's license number to a central clearing house).

### 4.3 Retrofittable Flexible Check-Out Lane

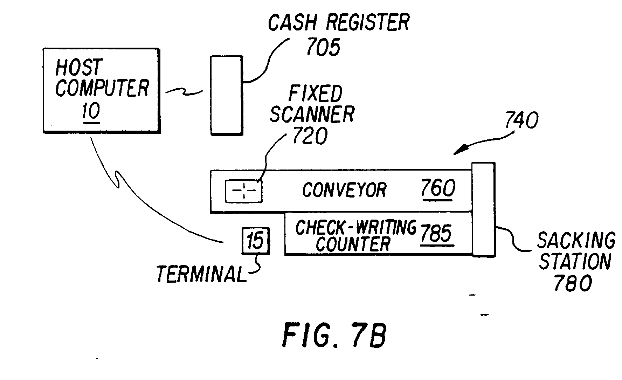

Referring to Figure 7B, in one embodiment of an improved check-out system a primary check-out station 700 is designed (or remodeled if necessary) to include an auxiliary checker well, which is configured to allow a human auxiliary checker to stand (or sit) on the other side of the fixed scanner 720. Many existing check-out lanes 700 already include space in which an auxiliary checker could stand in this manner; no significant remodeling of such lanes should be necessary in this respect. Such an auxiliary checker may be equipped as needed with an auxiliary check-out terminal such as a remote terminal 15, e.g., the portable terminal described above.

The terminal 15 is linked with a check-out computer (discussed below), which correlates scanned bar-code data with item price and item description information, by a suitable connection. In a particularly convenient arrangement, the cash register 705 includes a base station 12, 13, or 14 as described above, thereby allowing the cash register 705 to serve as the link between the terminal 15 and the host computer 10. In such an arrangement, item price data, brief item descriptions, and similar lookup table information can be downloaded periodically from the host computer 10 to the cash register 705 for storage in the memory 31 of the base station or in disk storage (not shown) of the base station. The base station and its CPU 30 thus serve as the check-out computer.

Alternatively, a base station 12, 13, or 14 may be strategically located elsewhere in the store. In another alternative, the terminal 15 may be plugged into a suitable jack (not shown) appropriately located in or near the check-out lane 700 to connect to the host computer 10 via a conventional cabling arrangement, using amplifiers and other conventional equipment as necessary; in such an arrangement, the host computer may function as the check-out computer.

The auxiliary checker may thus remove packages from the shopping cart 710 and scan them with the terminal 15, thereby relaying bar-code data from the scanned items to the check-out computer, at essentially the same time as the cashier is removing packages and dragging them across the fixed scanner 720. In this way, the speed of processing customers through the check-out lane 700 is increased.

This check-out system presents distinct advantages over conventional systems. It handles peak-period increases in customer traffic by activating terminals 15 instead of additional fixed scanners 720. During nonpeak periods these terminals 15 can be put to other uses such as inventory control, e.g., by selecting different preprogrammed functions using the terminal's keyboard 48 (or alternatively by down-loading new programming from, e.g., a program storage device such as disk storage 24 at a base station or a host computer 10 via the RF link), thus avoiding the economic waste of idling the no-longer-needed additional fixed scanners 720 and their floor space during such periods. Inasmuch as the peak-period customer throughput of a given check-out lane 700 is increased, the square footage in a store that must be dedicated to the check-out function is reduced, thus freeing up that square footage for additional display space or other uses. In any given store, existing conventional check-out lanes 700 that are not converted to other uses can be retrofitted without the need to replace the fixed scanner 720; if the terminals 15 are linked to the host computer 10 via an RF link as described above, the check-out lane 700 need not be significantly modified at all (except perhaps to provide more room for standby persons to work).

### 4.4 Improved Check-Out and Payment System

In an improved check-out and payment system for a grocery store or similar high-volume establishment, the check-out function of taking inventory of the customer's purchase is separated from the function of receiving the customer's payment.

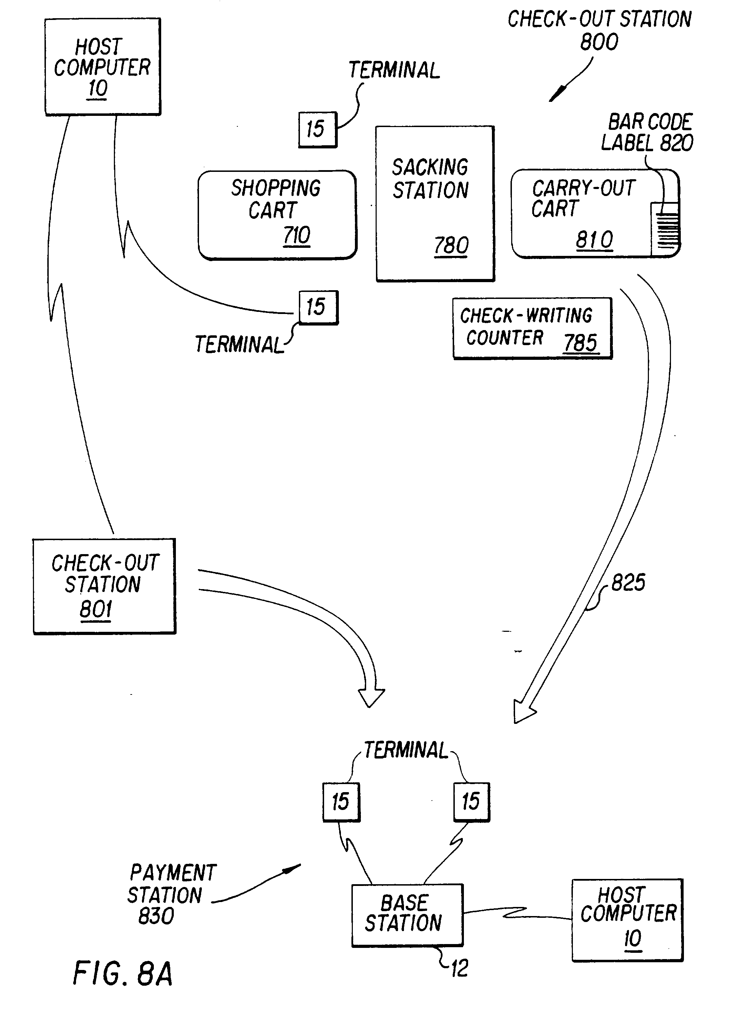

**(a) Transportable Check-Out Station.** Referring to Figure 8A, a customer takes his purchases to a primary check-out station 800, frequently with the purchases being carried in a shopping cart 710. The check-out station 800 may include a base station 12, 13, or 14, preferably transportable. A second primary check-out station 801 is shown in outline only.

Each item in the customer's shopping cart 710 is removed and machine-read by one or more checkers or, if unreadable, is manually recorded via a keyboard or other conventional means. One or more terminals 15 of the type discussed above may be used for both reading and manual recording. Information obtained by reading bar codes or by manual keyboard input is processed and stored in a transaction data file, e.g., by the base station 12, 13, 14, or by the host computer 10.

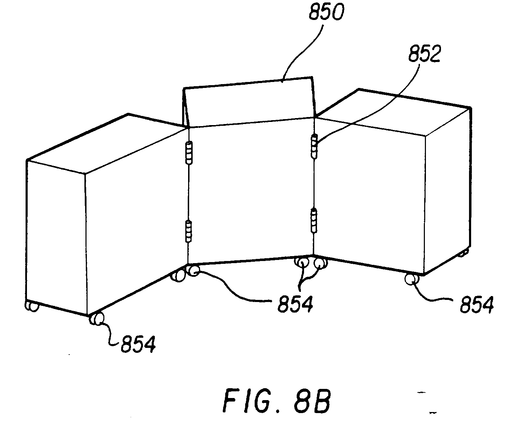

The purchases are sacked at a sacking station 780. If the customer desires, he or she may write a check at a check-writing station 785. The sacking station 80 and check-writing station 785 may comprise simple counters, which may be designed in any convenient form for easy portability and storage in a manner known to persons of ordinary skill. For example, as shown in outline form in Figure 8B, the sacking station 780 and check-writing station 785 may comprise foldable counters 850 that open for use on lockable hinges 852 and, when folded, may be easily moved on lockable wheels or casters 854.

With the benefit of this disclosure it will be apparent that the entire check-out station 800 may thus be readily taken down, moved, stored, and set up again when needed. During nonpeak periods, one or more check-out stations 800 may be taken down, thus freeing up space and equipment for other uses.

**(b) Separate Check-Out and Payment Stations.** Referring again to Figure 8A, the customer's purchases are bagged at the sacking station 780 and placed in a carry-out cart 810 in a conventional manner. The carry-out cart may of course be one and the same as the shopping cart 710.

Referring also to Figure 9A, to enable the antifraud measures discussed below, at a convenient point in the check-out process (e.g., at the beginning) a checker reads a bar code 820 affixed to and identifying the carry-out cart 810. Each purchased item's bar code 905 is likewise read. When all of a given customer's purchases are thus recorded at the check-out station 800, a checker so indicates, e.g., using a suitable key 48 on the terminal 15. As noted above, additional checkers may be employed at any given check-out station 800 on an as-needed basis to handle peak traffic periods.

In one embodiment, a human-readable itemized sales slip (not shown) is printed at the check-out station 800 using a bar code-capable printer (e.g., a printer 33a comprising part of a base station 12, 13, or 14) in the conventional manner in much the same way as an adding machine tape. When the total amount due has been computed, a sales-slip transaction bar code 910 is generated via process 915, e.g., by a base station 12 and printed on the sales slip. The transaction bar code 910 includes the total amount due as well as optional security-related information such as the date and time, the identity of the check-out station 800, the identity of the customer's carry-out cart, and the like.

As shown by arrows 825 in Figure 8A, the customer takes his or her bagged purchases, the sales slip, and the amount due to a payment station 830. If he so desires (e.g., if a check-writing station 785 is not provided at the particular check-out station 800), he may stop at a check-writing station 840 to write a check to avoid delaying others at the payment station 830.

At the payment station 830, the station operator uses a terminal 15 to read the transaction bar code 910 from the sales slip and thereby determine (a) the carry-out cart identification data previously encoded into the bar code 910, and (b) the amount due. The terminal 15 is also used to read the bar code 820 from the carry-out cart 810. The CPU 40 of the terminal 15 may compare the carry-out cart identification data from the cart bar code 820 and the transaction bar code 910 to verify that they match, as shown at process 920 in Figure 9A. This can be useful in reducing the chance that an unscrupulous customer might, e.g., bring with him an old sales slip for a previous low-dollar transaction and fraudulently give it to the payment station operator in lieu of the actual receipt for the current, comparatively high-dollar transaction. If not detected, such a customer could "spoof" the payment station operator into allowing the customer to leave with a large purchase while paying less than the amount owed.

In Figure 8, the payment station 830 is shown as receiving customers from both check-out stations 800 and 801. Depending on customer traffic flow, additional payment station operators equipped with terminals 15 can be assigned to the payment station 830. Alternatively or in addition, extra payment stations can be set up to handle increased traffic. The payment stations may conveniently comprise one or more counters 850 as shown in Figure 8B.

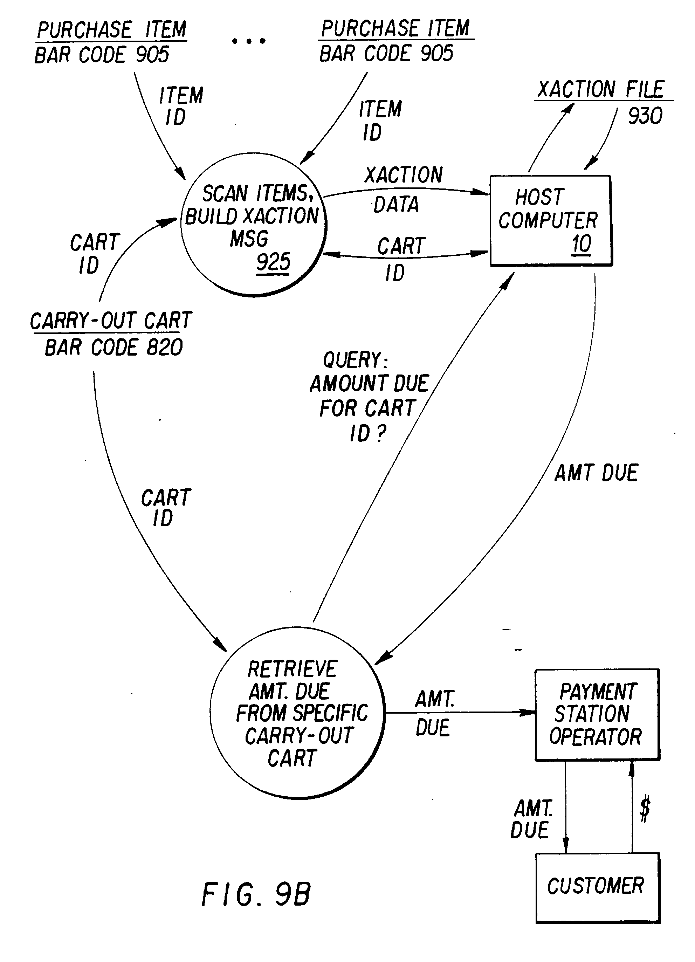

If it is not desired to provide the check-out station 800 with a printer, the bar code 820 on the carry-out cart may be used as a "claim check" to identify the transaction. Referring to Figure 9B, identification data encoded into the carry-out cart bar code 820 and the amount due may be saved at process 925 to a transaction data file 930 (e.g., by the host computer 10) for later retrieval by the operator of the payment station 830 using a terminal 15. The amount due may be displayed on the display 49 of the terminal 15 so that the payment station operator can determine whether the amount tendered matches the amount due.

### 4.5 Payment Station with Electronic Funds Transfer

A check-out station 800 of the kind described above, with or without a payment station 830, or alternatively a check-out lane 700, may be utilized in conjunction with an electronic funds transfer (EFT) system. Those of ordinary skill having the benefit of this disclosure will recognize that in this context an EFT system, generally speaking, permits a customer at a store or other establishment to transmit an electronic signal to the customer's bank (or, e.g., to the customer's credit card issuer, or to another institution at which the customer has an account), directing that the customer's bank account be debited for the amount of the customer's transaction at the store, and that the debited amount be transferred into the store's account at the same or another bank (or other institution).

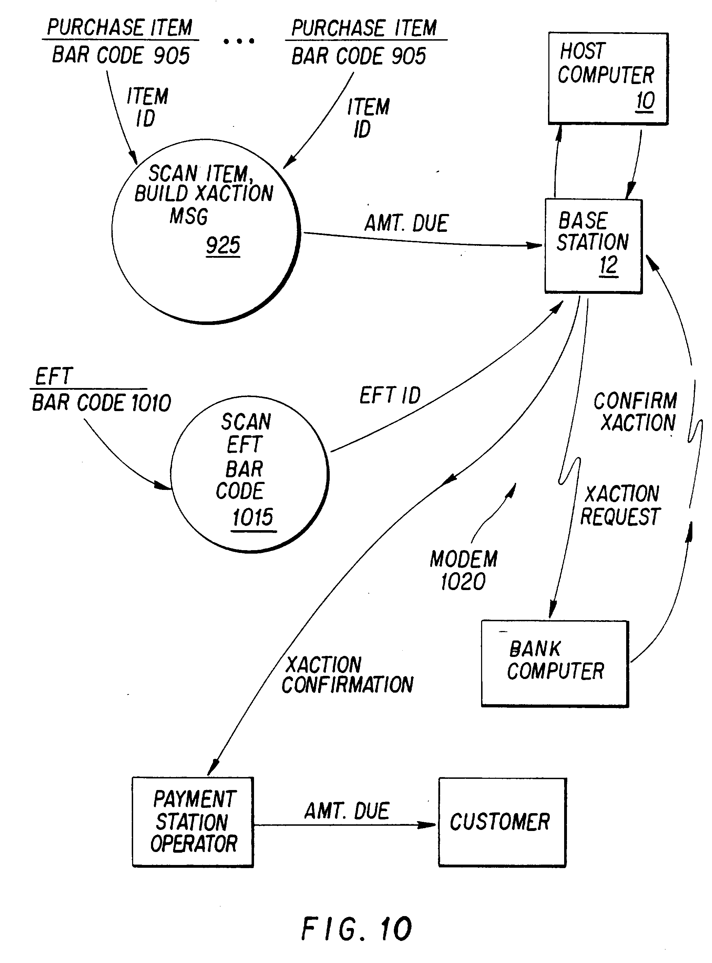

Referring to Figure 10, in one embodiment a customer applies to the store for an EFT card having printed thereon an identification code encoded in an EFT bar code 1010. In making the application, the customer supplies the store with bank and account identification data. The host computer 10 maintains a customer data file, e.g., in the disk storage 24, that includes the identification code as well as the bank and account identification data.

(Such a card could alternatively be issued by the customer's bank itself, either a a card or preprinted on the customer's checks, or could be issued by a third-party organization. In another alternative, a credit card number could be encoded in the bar code. Instead of being printed on an EFT card, such an identification code may be printed in a bar code label and given to the customer to apply to an existing record device, e.g., an already existing credit card, as has been done by some video rental stores to identify their customers.)

At the check-out station 800 (or alternatively at the payment station 830), the customer presents the EFT card to the station operator. Using a terminal 15, the station operator reads the EFT bar code 1010 (and if necessary the claim-check bar code 820) as illustrated by process 1015 and sends a signal to, e.g., the host computer 10 (or simply to the base station 12, 13, or 14 as illustrated in Figure 10) to associate the EFT identification code with the specific transaction. If desired, the programming of the system may be designed to require the customer to input a secret personal identification number (PIN) code using the keyboard 48 of the terminal 15 to confirm his or her authorization to use the EFT card.

The base station 12 queries the host computer 10 to retrieve the bank information necessary for an electronic funds transaction. If this information is already encoded in the EFT bar code 1010, this query may not be necessary. The base station builds an EFT transaction request and transmits it to the customer's bank or to a suitable service bureau, e.g., via a modem 1020 or alternatively by passing a transmittal request to the host computer 10. If the base station receives a reply that the EFT request has been approved by the customer's bank, it transmits a signal to that effect to the terminal 15 for display on the display 49. If desired, a printed receipt may be generated using the printer 33a.

Referring again now to Figure 8A, if desired the EFT bar code 1010 may be scanned at the check-out station 800. If customer traffic is heavy and it is desired to get the customer out of the check-out station 800, the customer may be asked to proceed to the payment station 830, where he may enter his PIN, wait for bank approval of the EFT request, and obtain his printed receipt. Alternatively, if a delay at the check-out station 800 is acceptable and the check-out station 800 is equipped with a base station 12 with a printer 33a, the customer may input his PIN and receive his printed receipt at the check-out station in lieu of proceeding to the payment station 830.

As still another alternative, the EFT card information and the fact that an EFT request had been submitted via the host computer 10 may be encoded in the transaction bar code printed on the sales slip at the check-out station 800. Then, at the payment station 830, the station operator may use the terminal 15 to query the host computer 10 whether the EFT request was approved by the customer's bank.

If desired, one or more check-out stations 800 may be designated for EFT card transactions only; traffic flow out of such stations could be set up so that their customers could exit the store directly, bypassing the payment station 830. The availability of rapid, specially privileged check-out would encourage customers to obtain and use EFT cards as a payment medium.

In an alternative embodiment, the EFT card could be used merely as a form of identification to speed up the store's decision whether to accept a customer's check. The EFT-card bar code 1010 may be scanned to obtain the customer's identification (e.g., driver's license number), which may then be transmitted in a conventional manner to a service bureau computer system or other system to ascertain whether the customer has been identified as a bad risk.

### 4.6 Real-Time EFT Check Processing

If the EFT card takes the form of a preprinted bar code label on the customer's blank checks, the printer 33a may be used to print a cancellation mark on the check immediately upon completion of the EFT transaction (inasmuch as there is then no need for the physical check to be processed and later returned to the customer). The payment station operator may then return the check to the customer for his or her records. For security purposes, the EFT request preferably should include the check number or similar identifying information so that an inadvertent or fraudulent attempt to process the check again will be less likely to succeed. Such an implementation permits essentially "real-time" processing of checks, facilitated by the customer's contemporaneous entry of his PIN code.

Customer checks without bank-account bar codes nevertheless will usually carry a bank identification and account number imprinted in magnetic ink (normally at the bottom of the check). A similar EFT request can be generated using this data, entered either manually by a human operator reading the magnetic-ink characters or by a conventional magnetic-ink scanner such as those found in banks. Once the EFT request is approved by the customer's bank, the check can be cancelled and returned to the customer.

### 4.7 Check-Processing Electronic Data Interchange (EDI)

A payment station 830 of the kind described above (or alternatively a check-out station 800 or a check-out lane 700) may be utilized in conjunction with an electronic data interchange (EDI) system for quicker processing of customers' paper checks, thus advantageously speeding up the store's receipt of funds from customers' banks.

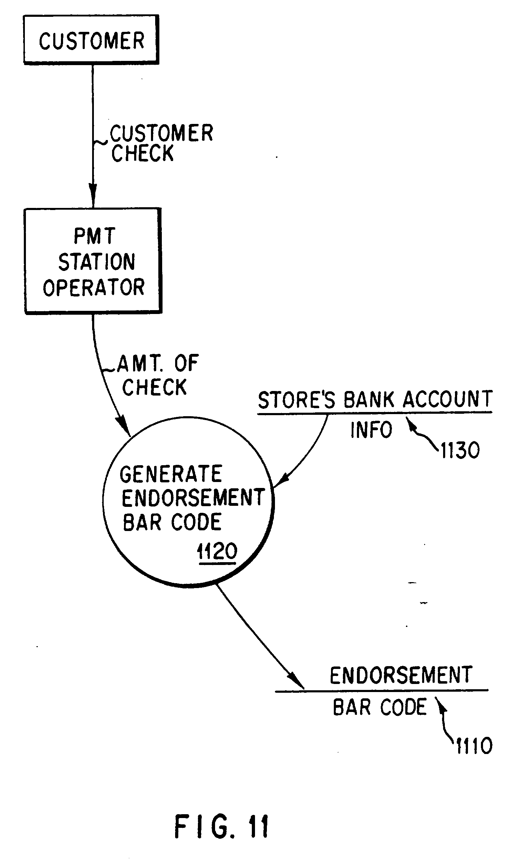

Referring to Figure 11, in such an embodiment a printer 33a of a base station 12, 13, or 14 at a payment station 830 is of a kind suitable for printing bar code labels. The payment station operator, receiving a paper check from a customer, aligns the check under the printing mechanism of the printer 33a. On a signal from the station operator, the printer 33a prints an endorsement bar code 1110 as illustrated at process 1120. This bar code may include some or all information needed to effectuate a transfer of funds from the customer's bank account to the store's bank account. Such information may include the amount of the check as entered by the payment station operator, as well as identification data concerning the store's bank and account number retrieved from a file 1130 stored, e.g., in a memory (not shown) at a base station 12.

The endorsement bar code 1110 printed on a check (e.g., on the back of a check) may thus replace a conventional endorsement stamp on the check. For greater convenience, the customer's check may include a preprinted bar code label containing his own bank identification number and account number in the same manner as is commonly done with magnetically readable inks.

### 4.8 Goods Processing System

An improved processing system for store inventory and other goods involves the use of a terminal 15 and a host computer 10 for more effective processing.

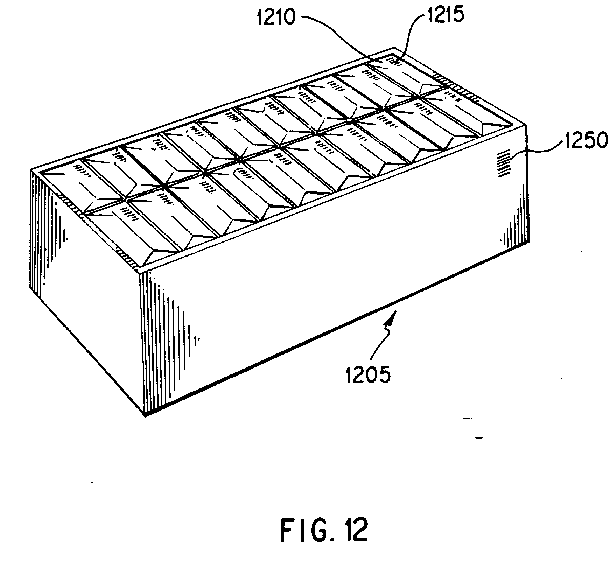

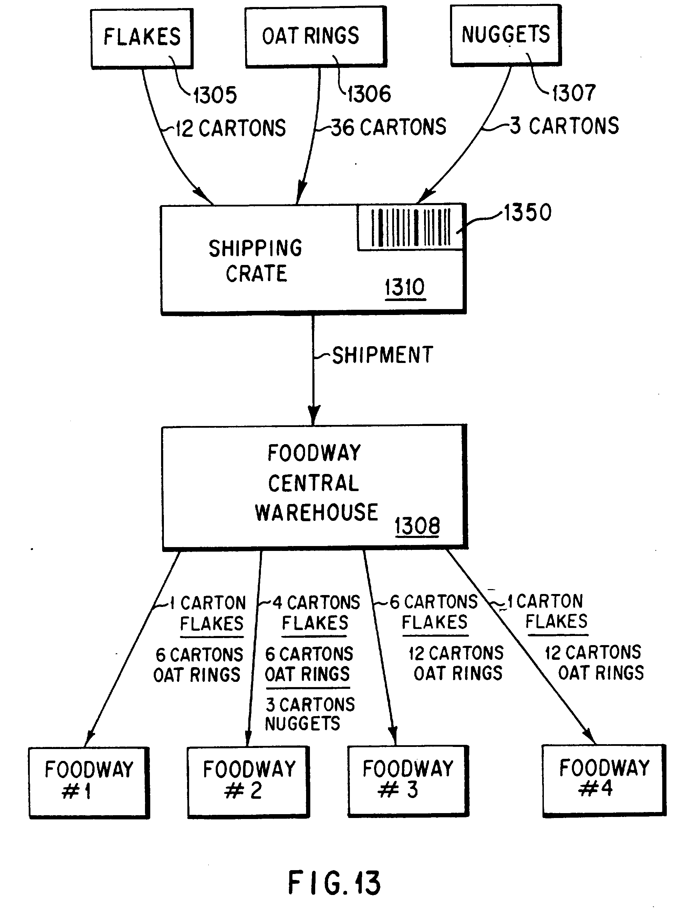

For purposes of convenient illustration, the improved processing system is described in connection with the movement of items from an origination point to a destination point via a receiving/redistribution point. Consider a hypothetical breakfast-cereal product line that is produced at a "CerealCo" company factory and is shipped to, e.g., a retail grocery store for eventual sale. Assume for this purpose that CerealCo cereals come in three types, referred to here as flakes, oat rings, and nuggets, and that they are shipped in cartons containing a dozen cereal boxes per carton. As shown in Figures 12 and 13, shipment-ready cartons 1205 of a dozen cereal boxes 1210 each are stored, e.g., in warehouse bays 1305, 1306, 1307 in the CerealCo factory or other convenient place.

During packaging (for example), an identifying bar code 1215 is conventionally applied to each cereal box, by printing or other suitable means. The piece-type bar code may be in the format of the well-known Universal Product Code (UPC), a 2D bar code as described above, or other suitable format; the bar code preferably contains identifying information such as one or more of: the type of cereal, the cereal lot number, CerealCo's name and address, and the like. Similarly, an identifying bar code 1250 is applied to each carton 1205 of cereal boxes 1210.

Referring to Figure 13, assume a hypothetical situation as follows. One of CerealCo's customers is the Foodway Grocery Company, which operates retail outlets #1 through #4 in a city. All Foodway stores in the city are served by a common warehouse and inventory receiving point 1308.

Foodway places an order with CerealCo for 12 cartons of flakes cereal boxes, 24 cartons of oat rings cereal boxes, and 3 cartons of nuggets cereal boxes. Foodway intends to redistribute these cereal boxes, once received at the receiving point, to its stores as follows:

| | Flakes | Oat Rings | Nuggets |
|---|---|---|---|
| Store #1 | 1 ctn | 6 ctn | |
| Store #2 | 4 ctn | 6 ctn | 3 ctn |
| Store #3 | 6 ctn | 12 ctn | |
| Store #4 | 1 ctn | 12 ctn | |
| | | | |
| TOTAL | 12 ctn | 36 ctn | 3 ctn |

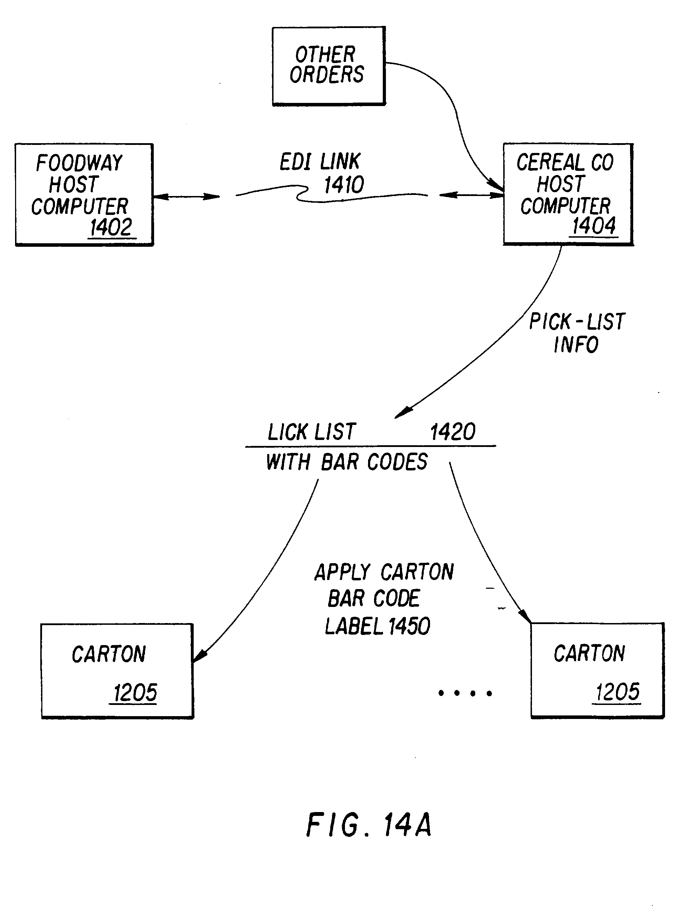

Referring to Figure 14A, the Foodway order, including addressing information for the destination stores, is transmitted to CerealCo in any convenient way, e.g., by telephone, telecopy, or the like, or alternatively by an electronic data interchange (EDI) technique. The order is conventionally input into a host computer 1402, e.g., via a scanner, a keyboard, or the like, or directly from a Foodway computer 1404 via an EDI link 1410.

The CerealCo host computer 1402 consolidates the Foodway order with other orders and prints a special pick-list form 1420, e.g., by transmitting the appropriate data to a base station 12 for printing on a printer 33a. The pick-list form 1420 is printed on blank stock that includes a series of blank peel-off labels (for use as bar code labels as discussed below).

As printed, the pick-list form 1420 includes appropriate order-filling information, e.g., the specific locations of warehouse bays 1305, 1306, 1307 from which cartons 1205 of cereal boxes 1210 are to be drawn to fill the orders. The pick-list form 1420 as printed also includes bar-coded destination address labels 1450, printed on the aforementioned blank labels, that are applied to cartons 1205 of cereal boxes 1210 stored at the location(s) specified on the pick-list form 1420. The pick-list form 1420 thus serves as a machine-readable destination-information storage device comprising transferable machine-readable destination-information modules. The labels 1450 may be applied manually and/or with suitable automatic means. The destination information encoded in the address labels 1250 may be as detailed as desired, perhaps even including the shelf locations at which the cereal boxes in question are displayed at various Foodway stores. This information may be supplied by Foodway, e.g., via the EDI link 1410.

As shown in Figure 13, the now-labeled cartons 1205 of cereal boxes 1210 are transported by suitable means (not shown) to an order filling station, where all cartons 1205 destined for the Foodway stores are consolidated for shipment into, e.g., one crate 1310. It will be apparent to those of ordinary skill having the benefit of this disclosure that the destination information included on the destination address labels 1420 (which were applied to the individual cartons 1205 as noted above) may be read using a terminal 15 or other reading means to aid in the sorting and order-consolidation process.

During the packing of the crate 1310 destined for Foodway, the carton bar codes 1250 are read by a terminal 15 or other suitable means. The information read from the carton bar codes 1250 is used to build a shipment list, e.g., in the memory 31 of a base station 12 at the order filling point, comprising identification information about each carton 1205 in the Foodway shipment.

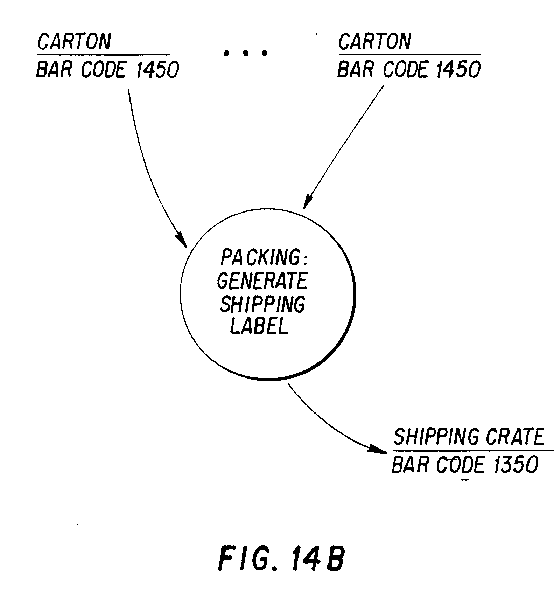

As illustrated in Figure 14B, when all cartons are loaded into the Foodway crate, a bar-coded crate shipping label 1350 is printed (e.g., at the printer 33a of a base station 12) and applied to the exterior of the crate. Alternatively, of course, the bar code label 1350 may be stenciled, spray-painted, or otherwise applied to the crate. The shipping label 1350 may include virtually any information desired, e.g., the point of origin of the crate, the destination, the contact person(s) at either the origin or the destination, insurance information, and the like.

The crate 1310 with its bar-coded shipping label 1350 is shipped by any convenient means, e.g., a commercial carrier company, to Foodway's central warehouse 1308. A terminal 15 may be used to read the shipping label 1350 when the crate 1310 physically leaves the CerealCo facility; shipping and departure information may be transmitted to the CerealCo host computer 1404 and thereby to the Foodway host computer 1402 via the EDI link 1410 in a conventional manner.

While the crate 1310 is in transit, the carrier company may use a terminal 15 or other suitable means to read information from the crate shipping label 1350 as needed; additional bar codes maybe printed and applied to the exterior of the crate as needed, e.g., to indicate handling instructions for the carrier company's personnel at various stages of the journey. As the crate 1310 arrives at particular points in the journey, this information may be transmitted to the carrier company's host computer 1510, where it may be made available as a status report to the Foodway and CerealCo host computers 1402 and 1404 via EDI links 1515 and 1516, respectively.

When the crate 1310 arrives at the Foodway central warehouse 1308, Foodway personnel may use a terminal 15 or other suitable means to read information from the crate shipping label 1350. The fact of receipt and other information so read may be communicated to and stored in Foodway's host computer 1402, which may then relay the information to the CerealCo host computer 1404 and generate a payment order to be transmitted to a bank host computer 1520 via an EDI link 1525.

At Foodway's warehouse 1308, the crate 1310 is unloaded, and each carton bar code label 1250 is read using a terminal 15 or other suitable means. The destination information encoded in the bar code labels 1250 maybe used in the manner described above for routing of the cartons 1205 to their respective specific destination Foodway stores. Alternatively, the information obtained by reading the bar code labels 1250 may be used to enter a lookup table, e.g., in the host computer's disk storage 24, in a conventional manner for this purpose.

Similar techniques maybe used by Foodway personnel for processing incoming shipments that do not include bar code labels. The destination information in question may be read (e.g., with an OCR scanner (not shown) and/or by manual keyboard entry using the keyboard 48 of a terminal 15); carton bar code labels 1250 may then be printed and applied to incoming cartons 1205, and cereal-box bar code labels 1215 may even be printed and applied to individual cereal boxes 1210, in the manner described above.

### 4.9 Inventory Management System

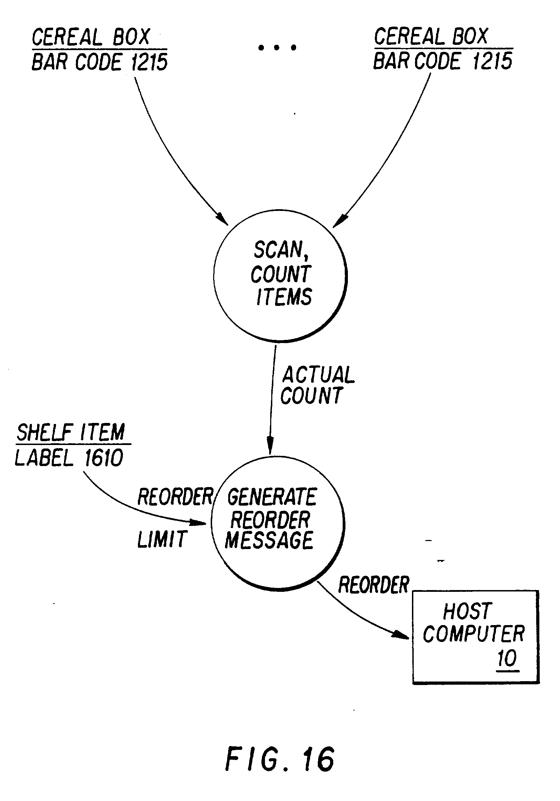

The retail store described above may use a system in accordance with the invention to manage its inventory more effectively. Referring to Figure 16, assume that the store utilizes conventional shelf item labels 1610, as is commonly seen in modern stores. The shelf item labels 1610 normally include human-readable information identifying specific items and stating the price; they also include bar-coded order information that can be a detailed as desired, e.g., the stock number of the item in question, the reorder limit (i.e., the lowest acceptable on-the-shelf count below which reordering is desired) and perhaps even information about the vendor or vendors who supply the item.

An inventory clerk may use a terminal 15 to read a shelf item label 1310. The terminal 15 may also be used to input an actual count of the items on the shelf, e.g., by reading bar codes (such as cereal-box bar codes 1215) from each individual item or by manually counting the items and entering the count on the keyboard 48 of the terminal 15. If the actual count is below the reorder limit, the CPU 40 of the terminal 15 generates a reorder message and transmits it to the host computer 10. Alternatively or in addition, the actual count itself may of course likewise be transmitted to the host computer 10 for storage, e.g., in disk storage 24, allowing the count information to be used in generating reports in any convenient manner.

### 5. CONCLUSION

It will be apparent to those of ordinary skill that the system described above may be implemented in a variety of ways equivalent to those disclosed above. The claims below are intended to encompass all such implementations.

## Claims

1. A merchandise check-out system for checking out a plurality of merchandise items carrying a bar code and carried in a shopping carrier, said system comprising:
(a) a check-out computer (10);
(b) a primary check-out station (700) including
(1) a bar code reader (720) operable to read bar code data from selected ones of said items,
(2) means for generating item-related information signals derived from said bar code data, and
(3) a primary communications link operable to transmit signals including said item-related information to said check-out computer: characterized by
(c) an auxiliary check-out terminal system including
(1) a bar code reader operable to read bar code data from selected ones of said items, and
(2) means for generating item-related information signals derived from said bar code data, and
(3) an auxiliary communications link operable to transmit signals including said item-related information to said check-out computer.

2. The merchandise check-out system of claim 1, wherein:
(x) said auxiliary communications link comprises a radio-frequency (RF) transmitter; and
(y) said merchandise check-out system further comprises an RF receiver receiving said item-related information signals from said RF transmitter.

3. The merchandise check-out system of claim 2, wherein said RF transmitter is an RF transceiver.

4. The merchandise check-out system of claim 2, wherein said RF receiver is mounted in proximity to said primary check-out station (700).

5. The merchandise check-out system of any of the preceding claims, wherein said primary check-out station (700) is a fixed station.

6. The merchandise check-out system of any of the preceding claims, wherein said auxiliary check-out terminal system comprises a portable auxiliary data terminal.

7. The merchandise check-out system of claim 6, wherein said portable auxiliary data terminal includes a keyboard.

8. The merchandise check-out system of any of the preceding claims, wherein said check-out computer (10) is located at a distance from said primary check-out station (700).

9. The merchandise check-out system of any of the preceding claims, wherein said primary communications link comprises a communications cable.

10. The merchandise check-out system of any of the preceding claims, wherein said primary communications link comprises an RF link.

11. The merchandise check-out system of any of the preceding claims, wherein said primary check-out station (700) comprises a portable primary data terminal.

12. The merchandise check-out system of claim 11, wherein said portable primary data terminal includes a keyboard.

13. The merchandise check-out system of any of the preceding claims wherein each said item has a purchase price stored in a purchase-price storage system, wherein
said auxiliary check-out terminal system further includes
a data entry device manually operable to generate item-related information signals, and
an RF transmitter broadcasting said item-related information signals; and wherein
said primary check-out terminal system (700) is located at a distance from said checkout computer and further includes :
a data entry device manually operable to generate item-related information signals, and
an RF receiver receiving item-related information signals from said auxiliary check-out terminal system.

14. The merchandise check-out system of claim 13, wherein said purchase-price storage system comprises a disk storage device operable as part of said check-out computer (10).

15. The merchandise check-out system of claim 13 or 14, wherein said purchase-price storage system comprises the respective bar codes applied to each said item.

16. The merchandise check-out system of any of claims 13 to 15, further comprising:
(d) price-retrieval means for retrieving the purchase price of each said item from said purchase-price storage system;
(e) price-summing means for computing a total transaction amount as a function of the sum of the respective purchase prices of the items; and
(f) machine-readable storage means for storing said total transaction amount.

17. The merchandise check-out system of claim 16, wherein said machine-readable storage means comprises a disk storage device operable as part of said check-out computer (10).

18. The merchandise check-out system of claim 16 or 17, wherein:
(x) said check-out station further comprises a bar-code printer;
(y) said machine-readable storage means comprises a bar-coded sales slip printed by said bar-code printer;
(z) said means for retrieving the total transaction amount at said payment station comprises a bar code reader operable to read said bar-coded sales slip.

19. The merchandise check-out system of any of claims 16 to 18, further comprising:
(g) a payment station including
(1) means for retrieving the total transaction amount from said machine-readable storage; and
(2) an amount-due display displaying said total transaction amount.

20. The merchandise check-out system of any of claims 16 to 18, further comprising:
(g) a bar code reader operable to read a customer-identification bar code identifying a customer account at a bank; and
(h) means (1020) for transmitting an electronic funds transfer (EFT) order to said bank to debit said customer account for the total transaction amount.

21. The merchandise check-out system of claim 19, wherein
said primary check-out terminal system further includes
a bar-code printer, wherein said machine readable storage means comprises
a bar-coded sales slip printed by said bar-code printer, the bar code on said sales slip encoding said total transaction amount; and wherein said means for retrieving comprises
a bar code reader operable to retrieve the total transaction amount from said bar-coded sales slip.

## Revendications

1. Système de caisse de sortie de marchandises pour contrôler la sortie d'un ensemble d'articles de marchandises portant des codes à barres et transportés dans un panier à provisions, ledit système comprenant:
(a) un ordinateur (10) de caisse de sortie;
(b) une station (700) de caisse de sortie principale comportant:
(1) un lecteur (720) de code à barres ayant pour fonction de lire des données de codes à barres sur ceux desdits articles qui sont sélectionnés,
(2) un moyen pour générer des signaux d'information relatifs aux articles à partir desdites données de codes à barres, et
(3) une liaison de communication principale ayant pour fonction de transmettre des signaux contenant ladite information relatifs aux articles audit ordinateur de caisse de sortie; caractérisé par
(c) un système de terminal de caisse de sortie auxiliaire comportant:
(1) un lecteur de code à barres ayant pour fonction de lire des données de codes à barres sur ceux desdits articles qui sont sélectionnés ; et
(2) un moyen pour générer des signaux d'informations relatifs aux articles à partir desdites données de codes à barres, et
(3) une liaison de communication auxiliaire ayant pour fonction de transmettre des signaux contenant ladite information relatifs aux articles audit ordinateur de caisse de sortie.

2. Système de caisse de sortie de marchandises selon la revendication 1, dans lequel:
(x) ladite liaison de communication auxiliaire comprend un émetteur radiofréquence (RF); et
(y) ledit système de caisse de sortie de marchandises comprend en outre un récepteur RF recevant lesdits signaux d'information relatifs aux articles dudit émetteur RF.

3. Système de caisse de sortie de marchandises selon la revendication 2, dans lequel ledit émetteur RF est un émetteur-récepteur RF.

4. Système de caisse de sortie de marchandises selon la revendication 2, dans lequel ledit récepteur RF est monté à proximité de ladite station (700) de caisse de sortie principale.

5. Système de caisse de sortie de marchandises selon l'une quelconque des revendications précédentes, dans lequel ladite station (700) de caisse de sortie principale est une station fixe.

6. Système de caisse de sortie de marchandises selon l'une quelconque des revendications précédentes, dans lequel ledit système de terminal de caisse de sortie auxiliaire comprend un terminal de données auxiliaire portatif.

7. Système de caisse de sortie de marchandises selon la revendication 6, dans lequel ledit terminal de données auxiliaire portatif comporte un clavier.

8. Système de caisse de sortie de marchandises selon l'une quelconque des revendications précédentes, dans lequel ledit ordinateur (10) de caisse de sortie est situé à une certaine distance de ladite station (700) de caisse de sortie principale.

9. Système de caisse de sortie de marchandises selon l'une quelconque des revendications précédentes, dans lequel ladite liaison de communication principale comprend un câble de communication.

10. Système de caisse de sortie de marchandises selon l'une quelconque des revendications précédentes, dans lequel ladite liaison de communication principale comprend une liaison RF.

11. Système de caisse de sortie de marchandises selon l'une quelconque des revendications précédentes, dans lequel ladite station (700) de caisse de sortie principale comprend un terminal de données principal portatif.

12. Système de caisse de sortie de marchandises selon la revendication 11, dans lequel ledit terminal de données principal portatif comporte un clavier.

13. Système de caisse de sortie de marchandises selon l'une quelconque des revendications précédentes, dans lequel chacun desdits articles a un prix d'achat stocké dans un système de stockage de prix d'achat, dans lequel:
ledit système de terminal de caisse de sortie auxiliaire comporte en outre
un dispositif d'entrée de données actionné à la main pour générer des signaux d'information relatifs aux articles, et
un émetteur RF diffusant lesdits signaux d'information relatifs aux articles; et dans lequel
ledit système (700) de terminal de caisse de sortie principal est situé à une certaine distance dudit ordinateur de caisse de sortie et comporte en outre:
un dispositif d'entrée de données actionné à la main pour générer des signaux d'information relatifs aux articles, et
un récepteur RF recevant des signaux d'information relatifs aux articles dudit système de terminal de caisse de sortie auxiliaire.

14. Système de caisse de sortie de marchandises selon la revendication 13, dans lequel ledit système de stockage de prix d'achat comprend un dispositif de stockage à disque fonctionnant en tant que partie dudit ordinateur (10) de caisse de sortie.

15. Système de caisse de sortie de marchandises selon la revendication 13 ou 14, dans lequel ledit système de stockage de prix d'achat comprend des codes à barres respectifs appliqués à chacun desdits articles.

16. Système de caisse de sortie de marchandises selon l'une quelconque des revendications 13 à 15, comprenant en outre:
(d) un moyen d'extraction de prix pour extraire le prix d'achat de chacun desdits articles dudit système de stockage de prix d'achat;
(e) un moyen de sommation de prix pour calculer le montant total d'une transaction en fonction de la somme des prix d'achat respectifs des articles; et
(f) un moyen de stockage lisible par machine pour stocker ledit montant total de transaction.

17. Système de caisse de sortie de marchandises selon la revendication 16, dans lequel ledit moyen de stockage lisible par machine comprend un dispositif de stockage à disque fonctionnant en tant que partie dudit ordinateur (10) de caisse de sortie.

18. Système de caisse de sortie de marchandises selon la revendication 16 ou 17, dans lequel:
(x) ladite station de caisse de sortie comprend en outre une imprimante de code à barres;
(y) ledit moyen de stockage lisible par machine comprend une étiquette de vente à code à barres imprimée par ladite imprimante de code à barres;
(z) ledit moyen pour extraire le montant total de transaction dans ladite station de paiement comprend un lecteur de code à barres ayant pour fonction de lire ladite étiquette de vente à code à barres.

19. Système de caisse de sortie de marchandises selon l'une quelconque des revendications 16 à 18, comprenant en outre:
(g) une station de paiement comportant:
(1) un moyen pour extraire le montant total de la transaction dudit moyen de stockage lisible par machine; et
(2) un dispositif d'affichage du montant dû affichant ledit montant total de la transaction.

20. Système de caisse de sortie de marchandise selon l'une quelconque des revendications 16 à 18, comprenant en outre:
(g) un lecteur de code à barres ayant pour fonction de lire un code à barres d'identification de compte d'un client auprès d'une banque; et
(h) un moyen (1020) pour transmettre un ordre de transfert de fonds électronique (TFE) à ladite banque pour débiter ledit compte de client du montant total de la transaction.

21. Système de caisse de sortie de marchandise selon la revendication 19, dans lequel ledit système de terminal de caisse de sortie principal comporte en outre:
une imprimante de code à barres, ledit moyen de stockage lisible par machine comprenant:
une étiquette de vente à code à barres imprimée par ladite imprimante de code à barres, le code à barres se trouvant sur ladite étiquette de vente codant ledit montant total de transaction, et ledit moyen d'extraction comprenant:
un lecteur de code à barres ayant pour fonction de déterminer le montant total de la transaction sur l'étiquette de vente à code à barres.

## Patentansprüche

1. Warenausgangssystem bzw. Warenausgabesystem bzw. Warenauschecksystem zum Ausgeben bzw. Auschecken einer Vielzahl von Warenstücken, die einen Strichcode tragen und in einem Einkaufsträger bzw. -wagen getragen werden, wobei das System folgendes aufweist:
(a)einen Ausgabe- bzw. Auscheckcomputer (10);
(b)eine primäre Ausgabe- bzw. Auscheckstation (700), die folgendes aufweist:
(1) einen Strichcodeleser (720), der betriebsfähig ist, Strichcodedaten von ausgewählten der Stücke zu lesen;
(2) Mittel zum Erzeugen von Informationssignalen, die sich auf die Stücke beziehen, die von Strichcodedaten abgeleitet sind, und
(3) eine primäre Kommunikationsverbindung, die betriebsfähig ist, Signale zu übertragen, und zwar einschließlich der mit den Stücken in Beziehung stehenden Information an den Auscheckcomputer gekennzeichnet durch:
(c)ein Hilfsausgabe- bzw. Auscheckterminalsystem, das folgendes aufweist:
(1) einen Strichcodeleser, der betriebsfähig ist, Strichcodeaten von ausgewählten der Stücke zu lesen, und
(2) Mittel zum Erzeugen von mit den Stücken in Beziehung stehenden Informationssignalen, die von den Strichcodedaten abgeleitet sind, und
(3) eine Hilfskommunikationsverbindung, die betriebsfähig ist, Signale zu übertragen, und zwar einschließlich der mit den Stücken in Beziehung stehenden Information an den Auscheckcomputer.

2. Warenauschecksystem nach Anspruch 1, wobei:
(x)die Hilfskommunikationsverbindung einen Hochfrequenz-(HF = RF = radio frequency) Übertrager aufweist; und
(y)das Warenauschecksystem ferner einen HF-Empfänger aufweist, der die mit den Stücken in Beziehung stehenden Informationssignale von dem HF-Sender empfängt.

3. Warenauschecksystem nach Anspruch 2, wobei der HF-Sender ein HF-Sendeempfänger bzw. -Transceiver ist.

4. Warenauschecksystem nach Anspruch 2, wobei der HF-Empfänger in der Nähe der primären Ausscheckstation (700) angebracht ist.

5. Warenauschecksystem nach einem der vorhergehenden Ansprüche, wobei die primäre Auscheckstation (700) eine fixierte Station ist.

6. Warenauschecksystem nach einem der vorhergehenden Ansprüche, wobei das Hilfsauscheckterminalsystem ein tragbares Hilfsdatenterminal aufweist.

7. Warenauschecksystem nach Anspruch 6, wobei das tragbare Hilfsdatenterminal eine Tastatur aufweist.

8. Warenauschecksystem nach einem der vorhergehenden Ansprüche, wobei der Auscheckcomputer (10) mit einem Abstand von der primären Auscheckstation (700) angeordnet ist.

9. Warenauschecksystem nach einem der vorhergehenden Ansprüche, wobei die primäre Kommunikationsverbindung ein Kommunikationskabel aufweist.

10. Warenauschecksystem nach einem der vorhergehenden Ansprüche, wobei die primäre Kommunikationsverbindung eine HF-Verbindung aufweist.

11. Warenauschecksystem nach einem der vorhergehenden Ansprüche, wobei die primäre Auscheckstation (700) ein tragbares primäres Datenterminal aufweist.

12. Warenauschecksystem nach Anspruch 11, wobei das tragbare primäre Datenterminal eine Tastatur aufweist.

13. Warenauschecksystem nach einem der vorhergehenden Ansprüche, wobei jedes Stück einen Kaufpreis gespeichert in einem Kaufpreisspeichersystem besitzt, wobei das Hilfsauscheckterminalsystem ferner folgendes aufweist:
eine Dateneingabeeinrichtung, die manuell betätigbar ist, um mit den Stücken in Beziehung stehende Informationssignale zu erzeugen und
einen HF-Übertrager bzw. -Sender, der die mit den Stücken in Beziehung stehenden Informationssignale sendet; und
wobei das primäre Auscheckterminalsystem (700) mit einem Abstand von dem Auscheckcomputer angeordnet ist und ferner folgendes aufweist:
eine Dateneingabeeinrichtung, die manuell betätigbar ist, um mit den Stücken in Beziehung stehende Informationssignale zu erzeugen, und
einen HF-Empfänger, der die mit den Stücken in Beziehung stehenden Informationssignale von dem Hilfsauscheckterminalsystem empfängt.

14. Warenauschecksystem nach Anspruch 13, wobei das Kaufpreisspeichersystem eine Scheiben- bzw. Disketten- bzw. Disk-Speichereinrichtung aufweist, die als ein Teil des Auscheckcomputers (10) betrieben werden kann.

15. Warenauschecksystem nach Anspruch 13 oder 14, wobei das Kaufpreisspeichersystem die jeweiligen Strichcodes, die an jedes Stück angelegt sind, aufweist.

16. Warenauschecksystem nach einem der Ansprüche 13-15, das ferner folgendes aufweist:
(d)Preiswiedererlangungsmittel zum Wiedererlangen des Kaufpreises jedes Stücks aus dem Kaufpreisspeichersystem;
(e)Preissummiermittel zum Berechnen eines totalen bzw. gesamten Transaktionsbetrags als eine Funktion der Summe der jeweiligen Kaufpreise der Stükke; und
(f)maschinenlesbare Speichermittel zum Speichern des gesamten Transaktionsbetrags.

17. Warenauschecksystem nach Anspruch 16, wobei die maschinenlesbaren Speichermittel eine Scheiben- bzw. Disketten bzw. Disk-Speichereinrichtung aufweisen, die als ein Teil des Auscheckcomputers (10) betrieben werden kann.

18. Warenauschecksystem nach Anspruch 16 oder 17, wobei:
(x)die Auscheckstation ferner einen Strichcodedrucker aufweist;
(y)die maschinenlesbaren Speichermittel einen strichcodierten Verkaufsstreifen, und zwar gedruckt von dem Strichcodedrucker, aufweisen;
(z)die Mittel zum Wiedererlangen des gesamten Transaktionsbetrages bei der Bezahlungsstation einen Strichcodeleser aufweisen, der betriebsfähig ist, den strichcodierten Verkaufsstreifen zu lesen.

19. Warenauschecksystem nach einem der Ansprüche 16-18, das ferner folgendes aufweist:
(g)eine Zahlstation, die folgendes aufweist:
(1) Mittel zum Wiedererlangen des gesamten Transaktionsbetrags von dem maschinenlesbaren Speicher; und
(2) eine Anzeige für den fälligen Betrag, die den gesamten Transaktionsbetrag anzeigt.

20. Warenauschecksystem nach einem der Ansprüche 16-18, das ferner folgendes aufweist:
(g)einen Strichcodeleser, der betriebsfähig ist, einen Kundenidentifikationsstrichcode zu lesen, der ein Kundenkonto bei einer Bank identifiziert; und
(h)Mittel (1020) zum Übertragen eines Elektronikfondsübertrag-(EFT = electronic funds transfer)-Auftrag, und zwar zu der Bank, um das Kundenkonto für den gesamten Transaktionsbetrag zu belasten.

21. Warenauschecksystem nach Anspruch 19, wobei das primäre Auscheckterminalsystem weiter folgendes aufweist: einen Strichcodedrucker, wobei die maschinenlesbaren Speichermittel folgendes aufweisen: einen strickcodierten Verkaufsstreifen, und zwar gedruckt von dem Strichcodedrucker, wobei der Strichcode auf dem Verkaufsstreifen den gesamten Transaktionsbetrag codiert, und wobei die Mittel zum Wiedererlangen einen Strichcodeleser aufweisen, der betriebsfähig ist, den gesamten Transaktionsbetrag von dem strichkodierten Verkaufsstreifen wiederzuerlangen.
